# EUROPEAN PATENT SPECIFICATION

(11) **EP 0 763 671 B1**
(45) Date of publication and mention of the grant of the patent: **28.02.2001**
(21) Application number: 96306275.7
(22) Date of filing: 29.08.1996
(51) Int. Cl.: F16F 9/12

(54) **Rotary damper**
Rotationsdämpfer
Amortisseur rotatif

(30) Priority: 01.09.1995 JP 24698895
(43) Date of publication of application: 19.03.1997
(73) Proprietor: ILLINOIS TOOL WORKS INC., Glenview, Illinois 60025 (US)
(72) Inventor: Kariya, Yositaka, c/o Nifco Inc., Yokohama-shi, Kanagawa-ken (JP)
(74) Representative: Gordon, Michael Vincent

(56) References cited:
- EP-A- 0 025 425
- EP-A- 0 677 693
- GB-A- 711 430
- US-A- 4 691 589

## Description

This invention relates to a rotary damper for damping the rotation of a driven gear engaged with a rack or a gear, by the viscous resistance of a viscous fluid.

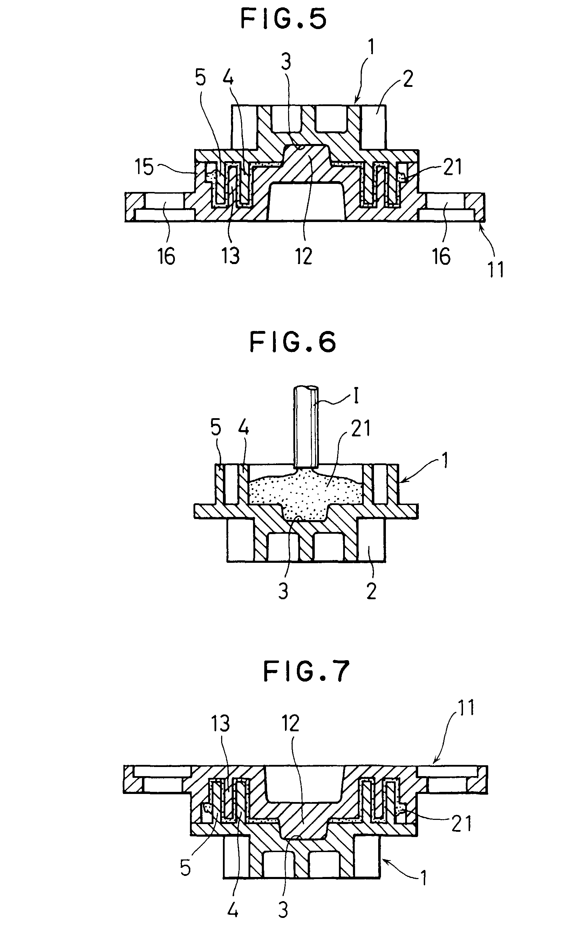

Figure 5 is a sectional view of a prior-art rotary damper of this type shown in its assembled state.

In Figure 5, reference numeral 1 designates a rotor which is molded of synthetic resin and formed on its front side with a driven gear 2, on its underside with a round engagement recess 3 whose center is aligned with the center of the driven gear 2, and with inner and outer cylindrical projections 4, 5 concentric with the round engagement recess 3.

Reference numeral 11 designates a stationary member which is molded of synthetic resin and formed with a cylindrical support shaft 12 which mates with the round engagement recess 3, a cylindrical partition 13 inserted between the inner and outer cylindrical projections 4, 5, a cylindrical peripheral wall 15 inward of which the outer cylindrical projection 5 is inserted, and two fastening holes 16 located outward of the cylindrical peripheral wall 15.

The height of the cylindrical partition 13 is lower than that of the cylindrical peripheral wall 15.

Reference numeral 21 indicates a viscous fluid, e.g., silicone oil or grease, charged into a gap formed between the rotor 1 and the stationary member 11.

Figures 6 and 7 are diagrams for explaining the steps for assembling the rotary damper of Figure 5.

The reference symbol I in Figure 6 designates an injection tube for injecting the viscous fluid 21.

The assembly will now be explained.

The rotor 1 is first fixed on a jig or the like with the inner and outer cylindrical projections 4, 5 facing upward as shown in Figure 6 and a prescribed amount of the viscous fluid 21 is injected through the injection tube I into the portion surrounded by the inner cylindrical projection 4.

Then, with the stationary member 11 oriented to direct the support shaft 12 and the like downward as shown in Figure 7, the support shaft 12 is mated with the round engagement recess 3, the cylindrical partition 13 is inserted between the inner and outer cylindrical projections 4, 5, and the outer cylindrical projection 5 is inserted to face the inner periphery of the cylindrical peripheral wall 15.

When the different portions are mated and inserted in this manner, the viscous fluid 21 is progressively forced to flow from the inside toward the outside and charged into the gap formed between the rotor 1 and the stationary member 11.

A rotary damper of the type shown in Figures 5 to 7 is disclosed in, for example, Japanese Utility Model Publication Hei 1-37236.

US-A- 4 691 589 also shows a rotary damper of the type shown in Figures 5 to 7.

When the round engagement recess 3 and the support shaft 12 of the prior-art rotary damper are mated after injecting the viscous fluid 21 inward of the inner cylindrical projection 4, the viscous fluid 21 in the round engagement recess 3 is difficult to force outward owing to the small size of the clearance between the round engagement recess 3 and support shaft 12. The assembly work is therefore inefficient.

While enlarging the clearance between the round engagement recess 3 and the support shaft 12 promotes the flow of the viscous fluid 21 and improves the efficiency of the assembly work, it increases the play between the round engagement recess 3 and the support shaft 12. The increased play causes new problems. Most notably it degrades the meshing between the driven gear 2 and an associated rack.

Moreover, the gap between the rotor 1 and the stationary member 11 follows a snaking path that first passes up and down along the surface of the inner cylindrical projection 4 and then passes up and down along the surface of the outer cylindrical projection 5. Since this makes the flow path resistance large, the amount of the viscous fluid 21 that is forced out of the round engagement recess 3 and supplied to the outer portions of the gap is insufficient for obtaining the desired damping effect.

This invention was accomplished in light of the foregoing problems and has as its object to provide a rotary damper that can be efficiently assembled, enables the desired damping effect to be obtained with ease, and is capable of enduring prolonged use.

According to one aspect of this invention, there is provided a rotary damper wherein two cylindrical projections projecting from the rear surface of a rotor formed on its front surface side with a driven gear are inserted inside a cylindrical peripheral wall projecting from a stationary member, a cylindrical partition projecting from the stationary member is inserted between the two cylindrical projections, one cylindrical projection is inserted between said cylindrical partition and another cylindrical partition projecting from the stationary member, a support shaft provided on one of the rotor and the stationary member is mated with a round engagement recess provided in the other of the rotor and the stationary member, and viscous fluid is disposed in a gap between the cylindrical projections and the cylindrical partitions, the rotary damper being characterised in that at least one of the inner surface of the round engagement recess and the outer surface of the support shaft is provided with grooves extending in the axial direction and/or at least one of the cylindrical projection and one cylindrical partition formed to be discontinuous.

Since, as is clear from the foregoing, the invention provides grooves in the inner surface of the round engagement recess and the outer surface of the support shaft, a large amount of the viscous fluid can be retained.

According to another aspect of this invention, there is provided a rotary damper wherein two cylindrical projections projecting from the rear surface of a rotor formed on its front surface side with a driven gear are inserted inside a cylindrical peripheral wall projecting from a stationary member, a cylindrical partition projecting from the stationary member is inserted between the two cylindrical projections, one cylindrical projection is inserted between the cylindrical partition and another cylindrical partition projecting from the stationary member, a support shaft provided on one of the rotor and the stationary member is mated with a round engagement recess provided in the other of the rotor and the stationary member, and viscous fluid is disposed in a gap between the cylindrical projections and the cylindrical partitions, the rotary damper being characterized in that at least one of the cylindrical projection and the cylindrical partition is formed to be discontinuous.

Since the cylindrical projection and the cylindrical partition are formed to be discontinuous, the viscous fluid can be quickly and sufficiently supplied to the different regions of the gap through the discontinuous portions.

The invention will now be explained in detail with reference to embodiments shown in the attached drawings, in which:

Figure 1 is an exploded perspective view of a first embodiment of the rotary damper of the invention.

Figure 2 is a plan view of the stationary member of the rotary damper of Figure 1.

Figure 3 is a sectional view of the rotary damper of Figure 1 in the assembled state.

Figure 4 is an exploded perspective view showing an example of the use of a rotary damper which is a second embodiment of the invention.

Figure 5 is a sectional view of an example of a prior-art rotary damper shown in its assembled state.

Figure 6 is a sectional view showing a step in the assembly of the rotary damper of Figure 5.

Figure 7 is a sectional view showing the mated state of a stationary member and a rotor of the rotary damper of Figure 5.

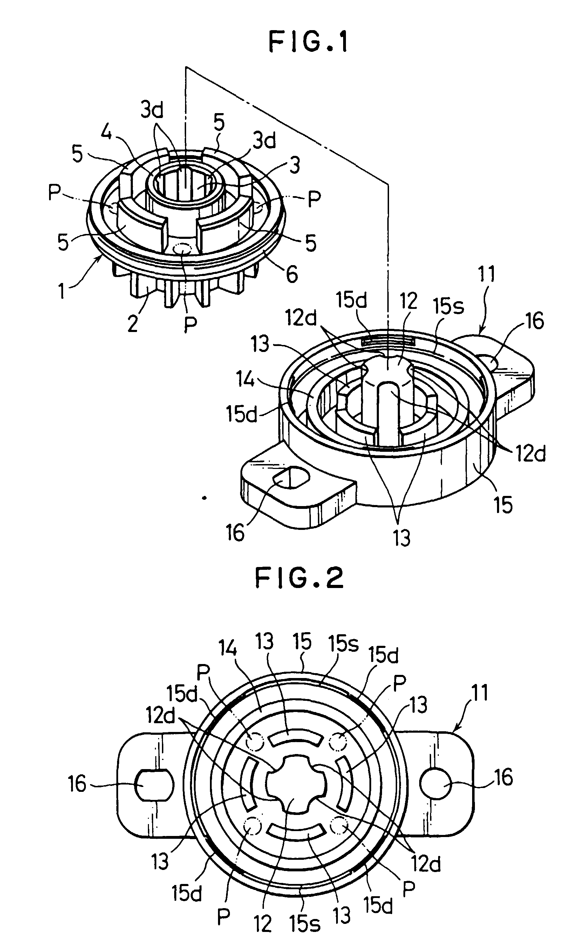

Figures 1 to 3 show a first embodiment of the rotary damper of this invention. Parts the same as or corresponding to those in Figures 5 to 7 are assigned the same reference numerals as in Figures 5 to 7 and are not explained further.

The rotor is shown upside down in Figure 1.

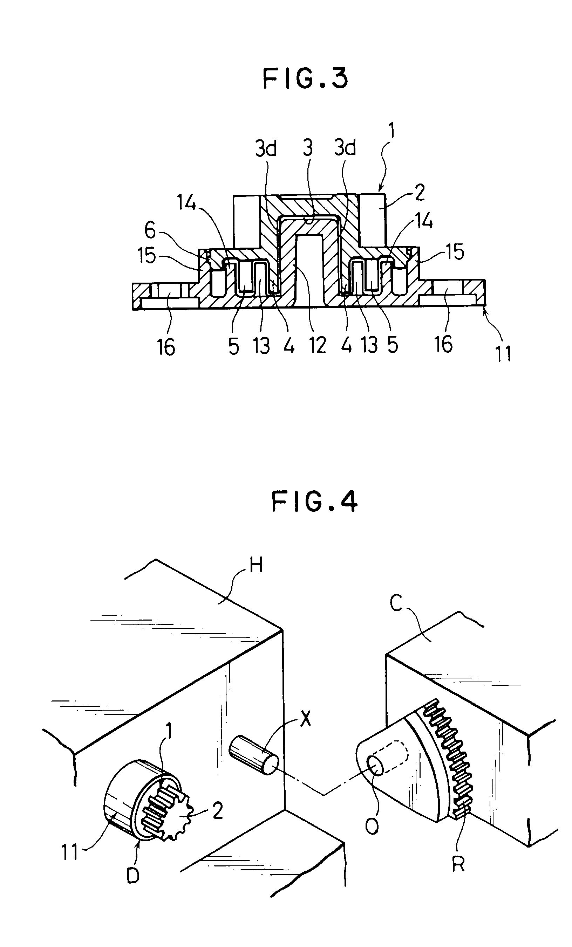

The viscous fluid is omitted from Figure 3 in order to make the gap between the rotor and the stationary member in the assembled state easier to understand.

In these figures, the reference numeral 3d designates grooves formed in the inner surface of a round engagement recess 3 to extend from one end to the other end thereof in the axial direction and spaced such that inner surface portions and groove 3d surface portions alternate at a center angle of, for example, 30 degrees.

Reference numeral 6 designates an annular rib provided around the outer periphery of the rotor 1. It rotatably mates with an annular step 15s explained later.

An inner cylindrical projection 4 doubles as a side wall of a round engagement recess 3.

An outer cylindrical projection 5 is discontinuously formed to have a gap extending over a center angle of 30 degrees once every center angle of 60 degrees.

Reference numeral 12d designates grooves formed in the outer surface of a support shaft 12 to extend from one end to the other end thereof in the axial direction and spaced such that outer surface portions and groove 12d surface portions alternate at a center angle of, for example, 45 degrees.

Reference numeral 14 designates an outer cylindrical partition which is concentric with a cylindrical partition 13 (hereinafter called the "inner cylindrical partition 13"). The inner cylindrical partition 13 is discontinuously formed to have a gap extending over a center angle of 30 degrees once every center angle of 60 degrees.

Reference numeral 15s designates an annular step provided around the upper inner edge of a cylindrical peripheral wall 15.

Reference numeral 15d designates four engagement pieces regularly spaced at the top of the inner surface of the cylindrical peripheral wall 15 to engage with the annular rib 6 and prevent it from detaching from the annular step 15s.

Reference symbol P indicates the striking points of knock-out pins used to knock the rotor 1 and the stationary member 11 out of their molds.

The removal of the rotor and the stationary member from their molds will now be explained.

As shown in Figure 1, even when only a narrow margin remains outside the outer cylindrical projection 5, it is still possible to secure the knock-out pin striking points P by utilizing the discontinuous portions of the outer cylindrical projection 5. As the knock-out pins can therefore be driven against the points P when the rotor 1 is removed from its mold, the work of knocking the rotor 1 out of its mold can be efficiently conducted.

As shown in Figure 2, even when the space between the outer cylindrical partition 14 and the inner cylindrical partition 13 is narrow, it is still possible to secure the knock-out pin striking points P by utilizing the discontinuous portions of the inner cylindrical partition 13. As the knock-out pins can therefore be driven against the points P when the stationary member 11 is removed from its mold, the work of knocking the stationary member 11 out of its mold can be efficiently conducted.

The assembly of the rotary damper will now be explained.

Similarly to what is shown in Figure 6 regarding the prior art rotary damper, the rotor 1 is first fixed on a jig or the like with the inner and outer cylindrical projections 4, 5 facing upward and a prescribed amount of a viscous fluid 21 is injected through an injection tube I into the portion surrounded by the inner cylindrical projection 4.

The stationary member 11 is then oriented to direct the support shaft 12 and the like downward, similarly to what is shown in Figure 7 regarding the prior art rotary damper, and the support shaft 12 is mated with the round engagement recess 3, the inner cylindrical projection 4 is inserted between the support shaft 12 and the inner cylindrical partition 13, the inner cylindrical partition 13 is inserted between the inner and outer cylindrical projections 4, 5, the outer cylindrical projection 5 is inserted between the cylindrical partitions 13, 14, and the annular rib 6 is pressed inside of the annular step 15s to engage with the engagement pieces 15d. The resulting assembled rotary damper is shown in Figure 3.

When the different portions are mated and inserted in this manner, the viscous fluid 21 is progressively forced to flow from the inside toward the outside and charged into the gap formed between the rotor 1 and -the stationary member 11. Even if the clearance between the round engagement recess 3 and the support shaft 12 is small, the viscous fluid 21 in the round engagement recess can easily pass through the grooves 3d formed in the round engagement recess 3 and the grooves 12d formed in the support shaft 12 at the time the support shaft 12 is mated with the round engagement recess 3. As a result, the assembly work can be efficiently conducted.

Moreover, since the clearance between the round engagement recess 3 and the support shaft 12 is small, play between the round engagement recess 3 and the support shaft 12 is eliminated, thereby ensuring good meshing of the driven gear 2 with an associated rack or the like.

In addition, since the outer cylindrical projection 5 and the inner cylindrical partition 13 are formed to be discontinuous, the viscous fluid 21 passes through the discontinuous portions of the outer cylindrical projection 5 and/or the inner cylindrical partition 13 and is sufficiently charged into the outer regions of the gap. As a result, the desired damping effect can be obtained.

Further, since the grooves 3d are formed in the round engagement recess 3, the grooves 12d are formed in the support shaft 12, and the outer cylindrical projection 5 and the inner cylindrical partition 13 are formed to be discontinuous, a large amount of the viscous fluid 21 can be held in the grooves 3d, 12d and the discontinuous portions of the outer cylindrical projection 5 and the inner cylindrical partition 13 and this viscous fluid 21 can be supplied to different regions of the gap from the grooves 3d, 12d and the discontinuous portions of the outer cylindrical projection 5 and the inner cylindrical partition 13. As a result, sufficient viscous fluid 21 can be uniformly supplied to the different gap regions, thereby obtaining a rotary damper capable of enduring prolonged use.

Figure 4 is an exploded perspective view showing an example of the use of a rotary damper which is a second embodiment of the invention.

Reference symbol H designates a housing provided on one side with a damper D and a support shaft X.

Reference symbol C designates a cover (shown as rotated 90 degrees to the right). The cover C is provided on one side with an insertion hole O into which the support shaft X is rotatably inserted and a rack R which is centered on the support shaft X and engages with the driven gear 2 of the damper D. The cover C is urged in the opening direction by a torsion spring or other such energizing means not shown in the drawing.

The damper D is not provided with the fastening holes 16 of the first embodiment.

In Figure 4, when the support shaft X is inserted into the insertion hole O, the rack R is engaged with the driven gear 2 and the cover C rotatably fastened to the housing H is rotated in the opening and closing directions, the opening and closing actions of the cover C can be damped at a desired torque. The opening and closing of the cover C can therefore be imparted with a damping effect.

While the first embodiment described earlier is provided with the grooves 3d in the round engagement recess 3 and the grooves 12d in the support shaft 12, a similar effect can also be obtained by providing only one or the other of the grooves 3d and the grooves 12d.

While the round engagement recess 3 is provided in the rotor 1 and the support shaft 12 is provided on the stationary member 11, it is possible instead to provide the support shaft on the rotor and the round engagement recess in the stationary member.

While the outer cylindrical projection 5 and the inner cylindrical partition 13 are formed to be discontinuous, a similar effect can be obtained by forming one er the other of the outer cylindrical projection 5 and the inner cylindrical partition 13 to be discontinuous, or, if the inner cylindrical projection 4 does not constitute the side wall of the round engagement recess 3, by also forming the inner cylindrical projection 4 to be discontinuous.

In the second embodiment, the damper D and the support shaft X are provided integrally with the housing H. Instead, however, the damper D and the support shaft X can be provided on a base and the base be fastened to the housing.

In the second embodiment, the rack R projects from a side surface of the cover C. Instead, however, the side surface of the cover C can be formed with a groove for insertion of the damper D and the rack can be formed at a position inward of the side surface.

As explained in the foregoing, since the invention provides grooves in at least one of the inner surface of the round engagement recess and the outer surface of the support shaft, even if the clearance between the round engagement recess and the support shaft is small, the viscous fluid in the round engagement recess can easily pass through the grooves at the time the support shaft is mated with the round engagement recess. As a result, the assembly work can be efficiently conducted.

Moreover, since the clearance between the round engagement recess and the support shaft is small, play between the round engagement recess and the support shaft is eliminated, thereby ensuring good meshing of the driven gear with a rack or the like.

Since at least one of the cylindrical projection and the cylindrical partition is formed to be discontinuous, it is possible to secure knock-out pin striking points by utilizing the discontinuous portions of the cylindrical projection or the cylindrical partition. As knock-out pins can therefore be driven against the striking points when the rotor and/or the stationary member is being removed from its mold, the work of knocking the rotor and/or the stationary member out of its mold can be efficiently conducted.

In addition, since at least one of the cylindrical projection and the cylindrical partition is formed to be discontinuous, the viscous fluid passes through the discontinuous portions of the cylindrical projection and/or the cylindrical partition and is sufficiently charged into the outer regions of the gap. As a result, the desired damping effect can be obtained.

Further, since at least one of the cylindrical projection and the cylindrical partition is formed to be discontinuous, a large amount of the viscous fluid can be held in the discontinuous portions of the cylindrical projection and/or the inner cylindrical partition and this viscous fluid can be supplied to different regions of the gap from the discontinuous portions. As a result, sufficient viscous fluid can be uniformly supplied to the different gap regions, thereby obtaining a rotary damper capable of enduring prolonged use.

## Claims

1. A rotary damper comprising:
a rotor (1) and a stationary member (11), two cylindrical projections (4, 5) projecting from a rear side of the rotor (1) which is formed on a front side with a driven gear (2), the two cylindrical projections (4,5) being inserted inside a cylindrical peripheral wall (15) projecting from the stationary member (11), two cylindrical partitions (13, 14) also projecting from the stationary member (11), one of the two cylindrical projections (5) being inserted between the two cylindrical partitions (13,14) and one of the two cylindrical partitions (13) being inserted between the two cylindrical projections (4,5), a support shaft (12) provided on one of the rotor (1) and the stationary member (11) being mated with a round engagement recess (3) provided in the other of the rotor (1) and the stationary member (11), and viscous fluid (21) being disposed in a gap between the cylindrical projections (4, 5) and the cylindrical partitions (13, 14);
characterized in that at least one of the inner surface of said round engagement recess (3) and the outer surface of said support shaft (12) is provided with grooves (3d; 12d) extending in the axial direction and/or at least one of said cylindrical projections (5) and said cylindrical partitions (13) is formed to be discontinuous.

2. A rotary damper according to claim 1, characterised in that grooves (3d; 12d) are provided in the inner surface of said round engagement recess (3) and the outer surface of said support shaft (12).

3. A rotary damper according to claim 1 or claim 2, characterised in that discontinuities are provided in at least one of said cylindrical projections (5) and at least one of said cylindrical partitions (13).

4. A rotary damper according to claim 3, characterised in that discontinuities are provided in the outer cylindrical projection (5) and the inner cylindrical partition (13).

5. A rotary damper according to any preceding claim, characterised in that the inner cylindrical projection (4) is an extension of the round engagement recess (3).

## Patentansprüche

1. Drehdämpfer, der folgendes aufweist:
- einen Rotor (1) und ein stationäres Element (11),
- zwei zylindrische Vorsprünge (4, 5), die von einer Rückseite des Rotors (1) vorspringen, an dessen Vorderseite ein angetriebenes Zahnrad (2) ausgebildet ist, wobei die zwei zylindrischen Vorsprünge (4, 5) in das Innere einer zylindrischen Umfangswand (15) eingesetzt sind, die von dem stationären Element (11) vorspringt,
- zwei zylindrische Trennwände (13, 14), die ebenfalls von dem stationären Element (11) vorspringen, wobei der eine der beiden zylindrischen Vorsprünge (5) zwischen die zwei zylindrischen Trennwände (13, 14) eingesetzt ist, und die eine der beiden zylindrischen Trennwände (13) zwischen die zwei zylindrischen Vorsprünge (4, 5) eingesetzt ist,
- eine Stützachse (12), die an einem von dem Rotor (1) und dem stationären Element (11) vorgesehen ist und mit einer runden Eingriffsausnehmung (3), die in dem anderen von dem Rotor (1) und dem stationären Element (11) vorgesehen ist, zusammengefügt ist, und
- ein viskoses Fluid (21), das in einem Zwischenraum zwischen den zylindrischen Vorsprüngen (4, 5) und den zylindrischen Trennwänden (13, 14) angeordnet ist;
dadurch gekennzeichnet,
daß zumindest eine von der Innenoberfläche der runden Eingriffsausnehmung (3) und der Außenoberfläche der Stützachse (12) mit Nuten (3d; 12d) versehen ist, die sich in der Axialrichtung erstrecken, und/oder daß zumindest eine Komponente von den zylindrischen Vorsprüngen (5) und den zylindrischen Trennwänden (13) diskontinuierlich ausgebildet ist.

2. Drehdämpfer nach Anspruch 1,
dadurch gekennzeichnet,
daß die Nuten (3d; 12d) in der Innenoberfläche der runden Eingriffsausnehmung (3) und der Außenoberfläche der Stützachse (12) vorgesehen sind.

3. Drehdämpfer nach Anspruch 1 oder 2,
dadurch gekennzeichnet,
daß Diskontinuitäten in mindestens einem von den zylindrischen Vorsprüngen (5) und mindestens einer von den zylindrischen Trennwänden (13) vorgesehen sind.

4. Drehdämpfer nach Anspruch 3,
dadurch gekennzeichnet,
daß Diskontinuitäten in dem äußeren zylindrischen Vorsprung (5) und der inneren zylindrischen Trennwand (13) vorgesehen sind.

5. Drehdämpfer nach einem der vorhergehenden Ansprüche,
dadurch gekennzeichnet,
daß der innere zylindrische Vorsprung (4) eine Verlängerung der runden Eingriffsausnehmung (3) ist.

## Revendications

1. Amortisseur rotatif comprenant :
un rotor (1) et un élément stationnaire (11), deux saillies cylindriques (4, 5) en saillie d'un côté arrière du rotor (1) qui est pourvu, sur un côté avant, d'un engrenage mené (2), les deux saillies cylindriques (4, 5) étant introduites à l'intérieur d'une paroi périphérique cylindrique (15) faisant saillie de l'élément stationnaire (11), deux cloisons cylindriques (13, 14) faisant également saillie de l'élément stationnaire (11), l'une des deux saillies cylindriques (5) étant introduite entre les deux cloisons cylindriques (13, 14), et l'une (13) des deux cloisons cylindriques étant introduite entre les deux saillies cylindriques (4, 5), un axe (12) de support, réalisé sur l'un du rotor (1) et de l'élément stationnaire (11), étant accouplé avec des évidements ronds (3) d'engrènement réalisés dans l'autre du rotor (1) et de l'élément stationnaire (11), et un fluide visqueux (21) étant disposé dans un espace entre les saillies cylindriques (4, 5) et les cloisons cylindriques (13, 14) ;
caractérisé en ce qu'au moins l'une de la surface intérieure desdits évidements ronds (3) d'engrènement et de la surface extérieure dudit axe (12) de support est pourvue de rainures (3d ; 12d) s'étendant dans la direction axiale et/ou en ce qu'au moins l'une desdites saillies cylindriques (5) et desdites cloisons cylindriques (13) est formée pour être discontinue.

2. Amortisseur rotatif selon la revendication 1, caractérisé en ce que ces rainures (3d ; 12d) sont réalisées sur la surface intérieure dudit évidement rond (3) d'engrènement et sur la surface extérieure dudit axe (12) de support.

3. Amortisseur rotatif selon la revendication 1 ou la revendication 2, caractérisé en ce que des discontinuités sont prévues dans au moins l'une desdites saillies cylindriques (5) et au moins l'une desdites cloisons cylindriques (13).

4. Amortisseur rotatif selon la revendication 3, caractérisé en ce que des discontinuités sont prévues dans la saillie cylindrique extérieure (5) et la cloison cylindrique intérieure (13).

5. Amortisseur rotatif selon l'une quelconque des revendications précédentes, caractérisé en ce que la saillie cylindrique intérieure (4) est un prolongement de l'évidement rond (3) d'engrènement.
